# EUROPEAN PATENT APPLICATION

(11) **EP 2 113 829 A1**
(43) Date of publication of application: **04.11.2009**
(21) Application number: 08008161.5
(22) Date of filing: 29.04.2008
(51) Int. Cl.: G06F 3/048, H04M 1/725

(54) **Method and device for providing access to data items**

(71) Applicant: Vodafone Holding GmbH, 40213 Düsseldorf (DE)
(72) Inventor: Leon, German, 40219 Düsseldorf (DE); Clavin, Neil, 40211 Düsseldorf (DE); Knight, John, Rickmansworth, Herts WD3 8ND (GB)
(74) Representative: Jostarndt, Hans-Dieter

(57) **Abstract**

A method for providing access to data items by means of communication device provided with a screen. The method comprises the following steps:
-- generating one icon for each received data item;
-- associating the one icon to the respective data item;
-- displaying the icons on the screen as a function of time when the assigned data item has been received; and
-- creating a three-dimensional view on the screen by displaying icons on different levels in the three-dimensional view. Furthermore, a device is suggested which comprises processing means provided for executing the method.

## Description

### Technical Field

The present invention relates to a method for providing access to data items by means of a device provided with a screen. In particular the invention is related to a method according to claim 1. The invention is also related to a device for executing the inventive method.

### Background of the invention

Today there is an increasing number of digital communication devices such as personal digital assistance (PDA), portable computers, mobile telephones, palmtop computers, etc.. Sometimes these devices are also equipped with cameras by taking pictures, as well as video and audio recordings. The features and capabilities of the devices lead to an increasing number of data files that maybe exchanged between different devices and users by wireless or wired networks. As an example, a mobile telephone is no longer limited for receiving and making voice calls that it may take photographs, receive e-mails and SMS messages and voice messages. The variety of different kinds of communication increases the number of communication items significantly. This number of communication items is increased even more because one and the same communication item of the above mentioned types is frequently copied to a plurality of recipients. Because of the sheer quantity it becomes consequently more and more difficult for individuals to organize their communication items on a communication device especially if the communication device has only a small screen.

It is known to set up different kinds of directories in which the communication items are listed in a sequential order according to different sorting criteria such as the name of the sender, receiving time, sent time, subject, and the like. However, conventional sorting mechanisms still do not solve the issue completely and the presentation of a large number of communication items remains difficult to organize in this way. In general, it is difficult to locate a specific communication item if the user has only incomplete or vague information for identifying the desired communication item.

Several attempts have been made to help the user to organize communication items in a more efficient way.

From US 2005/010864381 a topographic presentation of media files in a media diary application is known. The suggested topographic presentation is essentially realized on the calendar in which different kinds of communication items are graphically indicated allowing a user to preselect the kind of communication item he is looking for. However there still remains a desire to decrease the burden of the search for a specific communication item. Searches of the type "I remember that Diana sent me last week the photograph" are not sufficiently well supported by known technologies in spite of the fact that most users have frequently only such kind of memory of the item they are looking for.

### Summary of the invention

The present invention proposes a concept for improving the presentation of communication items in a communication device. In particular, the communication device is a portable communication device.

According to a first aspect, the invention suggests a method for providing access to data items by means of communication device provided with the screen. The inventive method comprises the following steps:
-- generating one icon for each received data item;
-- associating the one icon to the respective data item;
-- displaying the icons on the screen as a function of time when the assigned data item has been received; and
-- creating a three-dimensional view on the screen by displaying icons on different levels in the three-dimensional view.

It has been found to be advantageous if the method further comprises the step of reducing the size of icons as a function of their perspective reduction in the three-dimensional view.

In an embodiment of the invention the method further comprises the step of placing the icons in clockwise progressing positions on a single level on the screen.

The method can further comprise the step of creating a new level after a predetermined period of time has elapsed. Alternatively, the method can comprise the step of creating a new level after the current level has been filled with icons.

It has been found to be useful to dynamically adapting the graphical representation of icons as a function of the number of data items received.

In a advantageous embodiment the method comprises the step of providing a scrolling function along a timeline connecting the different levels in the three-dimensional view of icons.

According to a second aspect of the present invention a device is suggested which comprises processing means provided for executing the method according to the first aspect of the invention.

In an embodiment of the invention the device is a mobile communication device.

### Brief description of the drawing

Figures 1a to 1c show a grid type of presentation of icons of communication items;
figure 2 illustrates the presentation of icons of communication items according to the present invention; and
figures 3a to 3c show another kind of presentation of icons of communication items according to the present invention.

### Detailed description of embodiments of the invention

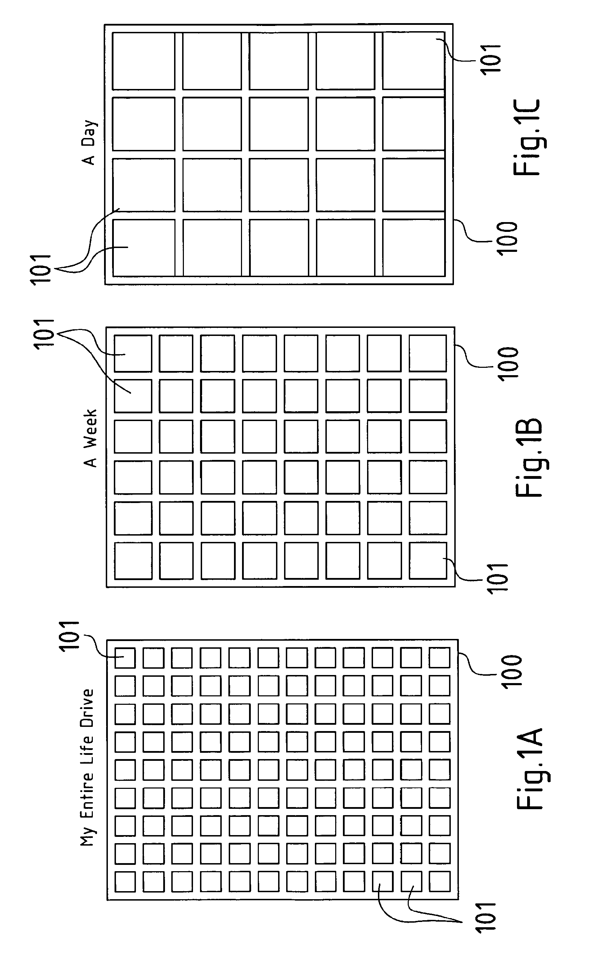

Figure 1a shows a screen 100 of a digital communication device. On the screen 100 a plurality of icons 101 related to received communication items are displayed in a grid type arrangement. Each communication item is represented by an icon on the screen. The term "communication item" shall have a broad meaning in relation to the present invention. On the one hand it includes e-mail, voice, and SMS messages and the like but also contacts with other people and web sites of service providers. On the other hand also media files like pieces of music, video clips or pictures shall be comprised by the meaning of communication item. However, technically speaking the communication item is just a data item.

The communication device as a whole is not shown in figure 1 for the sake of simplicity. In the present example the communication device may be a mobile phone or a PDA providing the user with a screen 100 of only limited size. The view of figure 1a presents the entire directory which is also referred to as "My Entire Life Drive". The directory may be stored in a memory of the device but preferably the directory is stored on a server of a network provider such that only a link to a specific communication item is stored in the device. This is particularly advantageous for mobile devices having limitations with regard to the size of the available memory as well as their energy consumption because storing a link and downloading a file is less energy consuming than downloading a potentially big file associated with the communication item. In particular during travels it is inconvenient for users if their communication device is running out of energy and becomes inoperative. In in the same way it is disturbing for a user if his communication device runs out of memory.

Figure 1b shows in a similar view of all communication items which have been received or sent during a time period of one week. Finally, figure 1c shows the communication items which have been received or sent during a time period of a single day. This kind of organization of communication items is also known in the prior art and allows a user to navigate through the directories of his communication items. However, the user has to select many icons if he is looking for an item for which he has only imprecise indications such like "it was word file received from Daniel last week". The time to search for this file depends extremely on how many word files have actually been received from Daniel last week. The search may turn out to be time consuming and cumbersome, in particular, if the memory of the user was not 100 % correct. I.e. in reality the word file has not been received from Daniel but from Diana. The grid representation does not provide the memory of the user with more information enabling him to search the communication item based on additional information. The only possibility for him to limit the number of items to be looked at is constraining the time period such that the number of items displayed is accordingly reduced. The disadvantage of this approach is that it forces the user to go through several time periods until he finds the right communication item. Today an increasing number of users participate in what is called "social networks" where they exchange messages, media files etc with a large number of participants being their contacts. Obviously, the number of communication items for this kind of users increases tremendously making it quite difficult to navigate through the entirety of communication items and their associated icons 101 in a grid type presentation as shown in figures 1a to 1c.

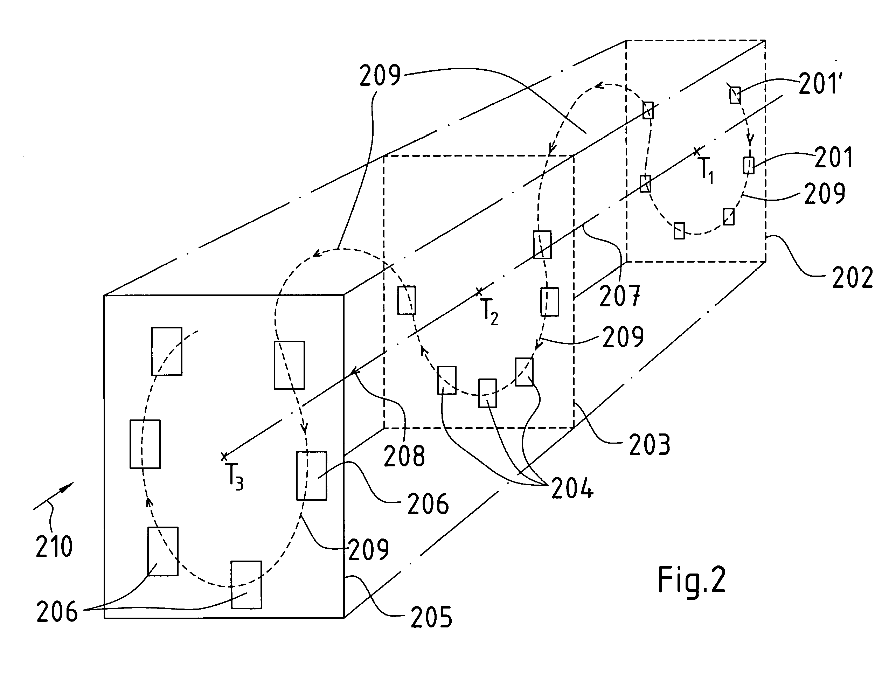

Figure 2 shows the presentation of icons 201 of communication items according to the present invention. A frame 202 shown in the background of figure 2 is referred to as "Now Frame". The Now Frame 202 has a duration of 1 minute or 60 seconds. The point in time when the Now Frame 202 begins is labelled T1. Each communication item received by the device is represented in the Now Frame 202 by an icon 201 in the following way: Depending on the exact moment when a communication item has been received an icon for this communication item is placed on a different position on the Now Frame 202. Specifically, each icon associated with a communication item moves in clock wise direction the later the associated communication item is received during the 1 minute duration of the Now Frame 202 similar as the second-hand moves across a dial plate of clock. For example if a communication item is received approximately 10 seconds after the Now Frame 202 has started the associated icon is placed at the position of icon 201'. Any communication item which is received at a later point in time is represented by an icon 201 which is moved in clock wise direction around the Now Frame 202 and appears at a different position. In this way the user has an immediate impression when an item has been received.

An alternative embodiment of the present invention is arranged to create a new Now Frame even before one minute has expired after the creation of the previous now frame if so many communication items are received such that the current Now Frame becomes "overpopulated" with icons and thus confused.

During every hour of the day 60 now frames are built up. During 1 day this leads to 1440 Now Frames for 1 day and 10080 Now Frames for 1 week. Obviously, stacking this large number of Now Frames one on the other would directly lead to similar complications as a grid view of the communication items shown in figures 1a to 1c. Therefore, the invention suggests to build up a kind of three dimensional presentation of the now frames which is illustrated in figure 2 and described in the following.

The next Now Frame 203 begins at a point in time which is labelled T2 which occurs later than the point in time T1. The Now Frame 203 becomes populated with icons 204 in the same way as it has already been described in connection with the Now Frame 202. Finally, at a point in time T3 a Now Frame 205 is created and becomes populated with icons 206. The point in time T3 is again later than the point in time T2. Consequently, a line 207 connecting the points T1, T2, and T3 represents a time line. The timeline 207 carries an arrow head 208 which points towards the future. Dashed arrows 209 visualise in which way icons are placed in during the course of time into the different Now Frames shown in figure 2. This particular way to place icons yields a three-dimensional impression of the presentation of the icons. In this way a "pillar" or "time tunnel" is built up. A user looking on the screen 100 of the device looks along a direction indicated by an arrow 210 in figure 2. He sees all icons of communication items which have been received in the past with perspective reduction of the icons the farther they are in the past. It is noted that only three different Now Frames 202, 203, and 205 are shown in figure 2. But in reality there may be many more Now Frames over the time in particular during office time of a working day when a user may receive a large quantity of business related e-mails, voice calls, SMS messages and so on. Similarly, during the weekend the user may have many private contacts.

Of course a clockwise ordering principle is only one example and it is in the scope of the present invention to also include other ordering principles such as counter clockwise or it something completely different. Whatever presentation will be finally selected, the user is provided with a qualitative overview of all communication items he has received over the time.

In the embodiment of the present invention described so far the time duration of one Now Frame is fixed and the same for all Now Frames. Similarly, the distance between different now frames on the timeline is the same. In another embodiment of the invention it may be considered that the duration of the time represented by a Now Frame depends on the number of contacts or communication items received during the duration of the Now Frame. Specifically, it may be useful to have a short duration for each Now Frame during the day while during the night this duration may be selected longer to facilitate the overview for the user.

In an alternative embodiment of the invention the size of the icons is reduced to allow for placing a larger number of icons on a single Now Frame.

In all embodiments of the present invention a microprocessor of the communication device executes program code to correctly place the icons on the screen 100. The related technology is known in the art and as such not part of the present invention.

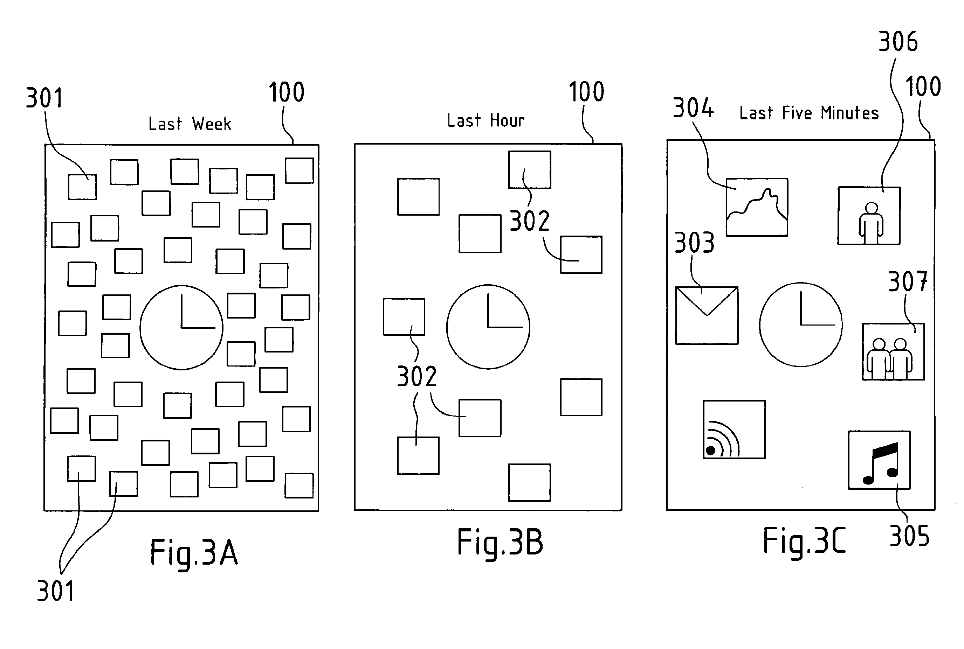

In order to support the user in navigating through all received communication items the communication device is provided with a scrolling element (not shown in the figures) such as a scroll wheel to allow the user to scroll along the timeline 207. The scrolling element permits the user to scroll to a certain position on the timeline 207 and also to select the time interval which shall be presented on his screen 100. In this way he achieves a qualitative overview of the communication items he has received. Different types of icons provide him with additional information to facilitate the search for a particular icon as will be explained in connection with figure 3.

Figures 3a to 3c schematically illustrate a view on the screen 100 depending on the duration of the time interval that has been selected by the user. Figure 3a shows a view displaying all icons 301 which have been received during the last week while at figure 3b shows all icons 302 of communication items which have been received during the last hour. Finally, figure 3c shows icons of communication items which have been received during the last five minutes. In figure 3c it is also visible that the icons are in fact different depending of what kind of communication item has been received. E.g. icon 303 indicates an e-mail message; icon 304 a picture, icon 305 a piece of music, icon 306 a contact, icon 307 a meeting request, and icon 308 an RSS feed. The different appearance of icons 303 to 308 supports the user in selecting a communication item he is looking for.

The essential element of an improved display of a large number of communication items is the perspective view allowing a user to see a large number of items and providing him with a good over view what has happened during the pre-determinable period of time such as one-day. Although he does not see all details of icons which have been created some time in the past because of the perspective reduction of their size he still can discern these icons. In this way the user is enabled to distinguish different types of icons and then he can easily scroll along the timeline 207 to watch these items in greater detail.

Although the present invention has been described in connection with the communication device it has a much broader application. The invention is everywhere useful way where a user needs to navigate through a large number of items which are received or created at different points in time. In of this kind of situations the invention provides a qualitative view of the entirety of items versus a conventional quantitative view which is known in the art.

## Claims

1. Method for providing access to data items by means of communication device provided with the screen (100), wherein the method comprises the following steps:
-- generating one icon (201, 204, 206) for each received data item;
-- associating the one icon (201, 204, 206) to the respective data item;
-- displaying the icons (201, 204, 206) on the screen as a function of time when the assigned data item has been received; and
-- creating a three-dimensional view on the screen by displaying icons (201, 204, 206) on different levels (202, 203, 205) in the three-dimensional view.

2. Method according to claim 1, wherein the method further comprises the step of reducing the size of icons (201, 204, 206) as a function of their perspective reduction in the three-dimensional view.

3. Method according to claim 1, wherein the method further comprises the step of placing the icons (201, 204, 206) in clockwise progressing positions on a single level (202, 203, 205) on the screen.

4. A method according to claim 3, wherein the method further comprises the step of creating a new level (203, 205) after a predetermined period of time has elapsed.

5. A method according to claim 3, wherein the method further comprises the step of creating a new level (203, 205) after the current level (202) has been filled with icons (201, 204, 206).

6. Method according to claim one, wherein the method further comprises the step of dynamically adapting the graphical representation of icons (201, 204, 206) as a function of the number of data items received.

7. Method according to one or several of the preceding claims, wherein the method comprises the step of providing a scrolling function along a timeline (207) connecting the different levels (202, 203, 205) in the three-dimensional view of icons.

8. Device comprising processing means provided for executing the method according to one or several of the preceding claims.

9. Device according to claim seven **characterized in that** of the device is a mobile communication device.
